# EUROPEAN PATENT SPECIFICATION

(11) **EP 3 867 095 B1**
(45) Date of publication and mention of the grant of the patent: **11.11.2026**
(21) Application number: 19873173.9
(22) Date of filing: 27.09.2019
(51) Int. Cl.: B60L 58/24, H01M 10/615, H01M 10/625, F01P 7/14, B60L 58/26, B60L 58/27

(54) **COOLING SYSTEM, VEHICLE COMPRISING SUCH COOLING SYSTEM AND A METHOD OF COOLING A BATTERY**
KÜHLSYSTEM, FAHRZEUG MIT EINEM SOLCHEN KÜHLSYSTEM UND VERFAHREN ZUM KÜHLEN EINER BATTERIE
SYSTÈME DE REFROIDISSEMENT, VÉHICULE COMPRENANT UN TEL SYSTÈME DE REFROIDISSEMENT ET PROCÉDÉ DE REFROIDISSEMENT D'UNE BATTERIE

(30) Priority: 16.10.2018 SE 1851261
(43) Date of publication of application: 25.08.2021
(73) Proprietor: Scania CV AB, 151 87 Södertälje (SE)
(72) Inventor: HALL, Ola, 117 67 Stockholm (SE)
(74) Representative: Scania CV AB
(86) International application number: PCT/SE2019/050928
(87) International publication number: WO 2020/080991

(56) References cited:
- WO-A1-2015/094097
- DE-A1- 102011 016 070
- FR-A1- 2 992 260
- JP-A- 2015 140 093
- KR-A- 20180 051 419
- US-A1- 2013 175 022
- US-A1- 2015 202 986
- US-A1- 2017 008 407
- US-A1- 2018 037 086
- US-B1- 9 701 215

## Description

### TECHNICAL FIELD

The invention relates to a cooling system for a vehicle and a vehicle comprising such a cooling system. The invention also relates to a method of cooling a battery in a vehicle.

### BACKGROUND

In the automotive industry it has become more and more important to a have an efficient utilization of resources, including waste heat. Typically, a vehicle contains different heat sources which are in need of cooling and of which the waste heat may be utilized to heat the cab of the vehicle and/or other features of the vehicle.

In a vehicle driven by an electric motor both the motor and the batteries for powering the motor may be in need of cooling to different degrees. The batteries should normally be held in a temperature interval between 15 and 30 °C, which means that although they produce waste heat and will need cooling most of time, there are also occasions where the batteries will need to be heated.

This calls for a system capable of both delivering and removing heat depending on current operation conditions and depending on the ambient temperature. Often, this may lead to cooling systems comprising separate heating and cooling systems, which may be space demanding and which may still not be fully adapted to handle different operation conditions and temperatures in a satisfactory manner.

US2015202986 describes a thermal management system for an electric vehicle having a refrigerant loop for a battery that allows a refrigerant for the battery to circulate among the battery, an evaporating unit and a heating device. The refrigerant for the battery may be heated by the heating device or cooled by increasing an output of a compressing unit.

US9701215 describes a method of controlling temperature of a battery module in a battery cooling system for a vehicle.

US2013175022 describes a thermal management system for an electric vehicle including a motor circuit for cooling a motor circuit thermal load, a cabin heating circuit for heating a cabin heater and a battery circuit for managing the temperature of a battery circuit thermal load. All of these circuits can fluidically communicate with each other and a single radiator can cool the fluid from all of these circuits.

It would be advantageous to achieve a cooling system overcoming, or at least alleviating, at least one or some of the drawbacks of the prior art. In particular it would be advantageous with a cooling system, which is adapted to handle different operation conditions and ambient temperatures in a satisfactory manner.

### SUMMARY OF THE INVENTION

It is an object of the invention to provide a cooling system, which is adapted to handle different operation conditions and different ambient temperatures, and in which cooling system resources may be utilized in an efficient manner.

According to a first aspect the invention relates to a cooling system for tempering a battery inside a specific temperature interval, the cooling system comprising:
- a chiller and a chiller line arranged in heat exchange with said chiller,
- a heat source and a high temperature line arranged in heat exchange with said heat source,
- a battery line arranged in heat exchange with the battery,
- at least one pump, arranged to in operation convey a cooling fluid in at least one of said lines, and
- a condenser and a refrigeration circuit arranged in heat exchange with said condenser, wherein a working medium is arranged to in operation be circulated in said refrigeration circuit, wherein the chiller line is selectively connectable into at least partial heat exchange with the battery line so as to provide cooling of the battery, and wherein the high temperature line is selectively connectable into at least partial heat exchange with the battery line to heat the battery.

With the inventive cooling system, it is possible to provide a desired temperature to a battery regardless of the ambient temperature and regardless of a current operation mode.

The inventive cooling system inter alia provides for the possibility to have one temperature in the chiller line, and another preferably higher temperature in the battery line cooling the battery. This allows the chiller to operate at an optimal temperature and at the same time provide a cooling fluid to the battery line of an optimal temperature for cooling the battery.

In embodiments of the invention the working medium of the refrigeration circuit is arranged to be cooled by heat exchange with the cooling fluid in the high temperature line in said condenser.

In embodiments of the invention the refrigeration circuit is arranged via the chiller, said chiller being arranged to heat the working medium of the refrigeration circuit by heat exchange with the cooling fluid in the chiller line, which cooling fluid is thereby cooled. Thereby, the chiller and condenser will contribute to the tempering of the battery both in typical summer conditions, where the battery may be cooled be the chiller, and in typical winter conditions, where the battery may be heated be the condenser.

In embodiments of the invention the cooling system comprises at least one radiator, which is connectable to the chiller, to selectively heat said chiller.

In embodiments of the invention the cooling system comprises a radiator, which is connectable to the high temperature line, so as to selectively cool the cooling fluid in said high temperature line, said radiator being either the same radiator as the at least one radiator that is connectable to the chiller, or a separate radiator.

In embodiments of the invention at least one valve is arranged to selectively connect the chiller line into heat exchange with the battery line so as to provide cooling of the battery, and wherein at least one valve is arranged to selectively connect the high temperature line for heat exchange with the battery line to heat the battery. The valves may be regulated between a very low flow to a full flow allowing a desired heat exchange to take place in order to correctly temper the battery.

In embodiments of the invention the heat source is an electric engine, a combustion engine and/or an electric heater.

In embodiments of the invention the cooling system comprises a mixing line, wherein the chiller line and/or the high temperature line are connectable for heat exchange with the battery line via said mixing line. The mixing line may be used as an instrument to provide a correct temperature to the battery. The mixing line provides a possibility to have different temperatures, which may be optimised for each line, in the high temperature line, the chiller line, and the battery line, respectively. This may be achieved in that each line has an individually controlled partial heat exchange with the mixing line. In reality, the system may include more than one mixing line, which may or may not be interconnected to each other.

In embodiments of the invention the cooling system further comprises an AC circuit for providing an air flow of a desired temperature to a cab, the condenser being arranged to cool a working medium that is circulated in said AC circuit and wherein said AC circuit comprises an evaporator for absorbing heat to said working medium from the air flow to be provided to the cab as said working medium is evaporated in said evaporator. With this embodiment the condenser will have a double function, i.e. both for tempering the battery in all conditions of ambient temperature, but also to climatize a cab in all conditions of ambient temperature.

In embodiments of the invention the chiller line, battery line, and the high temperature line are interconnectable such that the same cooling fluid may be circulated in all of said lines. This is a compact and effective manner of achieving a heat exchange between the relevant parts of the cooling system.

In embodiments of the invention a main mixing valve is arranged to selectively connect the chiller line to the battery line, and/or wherein a battery outlet valve is arranged to selectively connect the battery line to the high temperature line.

In embodiments of the invention the battery line comprises a plurality of sublines, for cooling separate batteries or separate portions of the battery, each subline being provided with a separate pump.

In embodiments of the invention sensors are arranged to monitor the temperature in the different lines, and wherein a control unit is arranged to control the heat exchange between the chiller line and the battery line and/or between the high temperature line and the battery line based on said monitored temperatures. The control unit makes it possible to automatize the regulation of the cooling system.

According to a second aspect the invention relates to a vehicle that comprises a cooling system as disclosed above.

According to a third aspect the invention relates to a method of tempering a battery in a vehicle, the method comprising the following steps:
- monitoring a current temperature of said battery,
- based on said monitored temperature, deciding if said battery needs to be cooled or heated, wherein cooling is decided to be needed if the current temperature is above a high threshold temperature, and wherein heating is decided to be needed if the current temperature is below a low threshold temperature,
- if the current temperature is above said high threshold temperature, providing a cooling fluid of a temperature that is lower than said high threshold temperature to cool said battery with cooling fluid cooled in a chiller, said chiller thereby heating a working medium that is circulated to a condenser where it is cooled,
- if the current temperature is below said low threshold temperature, providing a cooling fluid of a temperature that is higher than said low threshold temperature to heat said battery from a heat source and/or said condenser.

The method may further comprise steps for air climatization of a cab in a vehicle, the method thus comprising the following steps:
- monitoring a current temperature of said cab,
- based on said monitored temperature, deciding if said cab needs to be cooled or heated, wherein cooling is decided to be needed if the current temperature is above a high threshold temperature, and wherein heating is decided to be needed if the current temperature is below a low threshold temperature,
- if the current temperature is above said high threshold temperature, providing heat exchange in an evaporator for the air flow entering the cab with the working fluid arriving from said chiller,
- if the current temperature is below said low threshold temperature, providing heat exchange for the air flow entering the cab with the cooling fluid heated by said heat source and/or said condenser.

Other embodiments and advantages will be apparent from the detailed description and the appended drawings.

### BRIEF DESCRIPTION OF THE DRAWINGS

Below, specific embodiments of the invention will be described with reference to the appended drawings, of which;
- **Fig. 1**: is a schematic representation of a cooling system according to a first embodiment,
- **Fig. 2**: is a schematic representation of a cooling system according to a second embodiment,
- **Fig. 3**: is a schematic representation of a cooling system according to a third embodiment,
- **Fig. 4**: is a schematic representation of a cooling system according to a fourth embodiment,
- **Fig. 5**: is a schematic representation of a cooling system according to a fifth embodiment,
- **Fig. 6**: is a schematic representation of a cooling system according to a sixth embodiment,
- **Fig. 7**: is a schematic representation of a cooling system according to a seventh embodiment,
- **Fig. 8**: is a block diagram of a method of climatizing a battery, and
- **Fig. 9**: is a block diagram of a method of tempering a cab of a vehicle.

### DETAILED DESCRIPTION OF THE SHOWN EMBODIMENTS

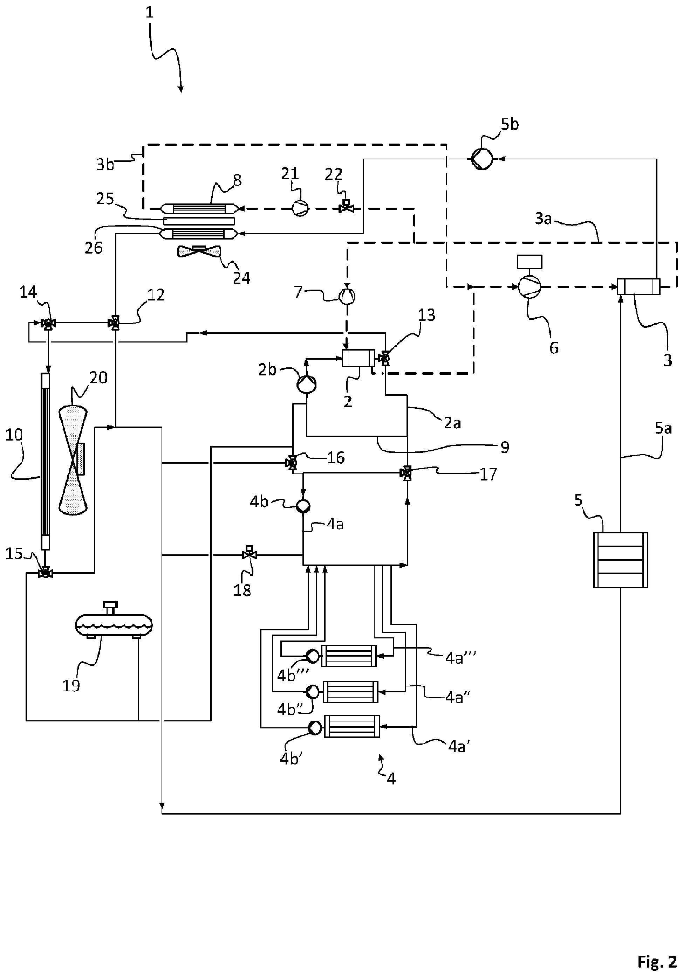

Below, a cooling system 1 in accordance with the invention will be described as a cooling system of a vehicle 23. The cooling system may however also be used in other applications. The vehicle 23 is very schematically illustrated by a box 23 with interrupted lines incorporating the cooling system 1. The cooling system and methods shown in the figs. 2-8 are also adapted for use on a vehicle, although no vehicle is illustrated in these drawings.

The cooling system 1 described below includes a number of valves, pumps and interconnected lines. In order to distinguish them from each other some of these features are given names related to nothing else than their specific location in the system, typically based on the vicinity to another feature.

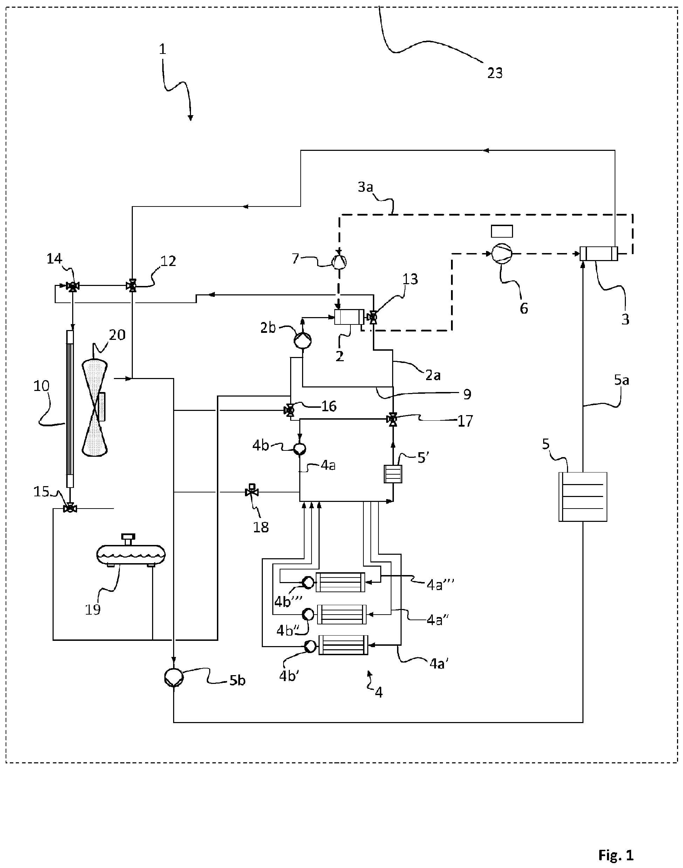

In fig. 1 a first embodiment of a cooling system 1 is presented. The cooling system comprises a chiller 2, which is arranged on a line, here denoted the chiller line 2a, wherein a pump, here denoted the chiller pump 2b, is arranged to circulate a cooling fluid in said chiller line 2a via said chiller 2. The chiller line 2a is connectable for heat exchange with a battery line 4a passing a battery 4 comprised of one or more parts or battery packs. Throughout this specification, the terms connectable for/into "heat exchange" is used to cover both heat exchange by mixing of cooling fluid and the heat exchange of cooling fluid over a heat exchanger.

A battery pump 4b may be provided to circulate the cooling fluid along the battery line 4a. In the shown embodiment the battery 4 includes three individual battery packs that are tempered in parallel via separate sub-lines 4a', 4a" and 4a"', each line being provided with an individual pump 4b', 4b" and 4b"'. The outlet of these sub-lines 4a', 4a" and 4a‴ arrive upstream on the battery line 4a with respect to inlet of the same sub-lines 4a', 4a" and 4a"'. Hence, a portion of the cooling fluid passing by the battery packs is recirculated after having been mixed with a portion arriving from the battery line 4a.

The battery line 4a may be fed from different sources depending on a current temperature need of the battery. In summer conditions, the battery typically need to be cooled to be maintained in a typical desired temperature interval of 15-30 °C. Therefore, in such conditions, the cooling fluid from the chiller line 2a is arranged to cool the battery 4. In the shown embodiment the chiller line 2a is connected to the battery line 4a via a mixing line 9, to which other lines may also be connected. The mixing line 9 allows for the possibility to control the temperature of the cooling fluid arriving to the battery line from inter alia the chiller line 2a. A main mixing valve 17 is arranged to allow a portion of the flow in the battery line 4a to pass into the mixing line 9. In the shown embodiment the mixing line 9 may be seen as a part of the chiller line 2a.

The mixing line 9 is, in the shown embodiment, also connectable for heat exchange with a high temperature line 5a that passes by a heat source 5. The heat source 5 may be an electrical heater or it may be a power means in need of cooling, such as the power electronics of the vehicle, an electric motor for driving the vehicle, or it may be a combustion motor if one is provided on the vehicle. In the shown embodiment a heat return valve 16 is arranged to allow a return flow into the battery line 4a. The heat return valve 16 may hence be opened from the high temperature line 5a when the battery 4 needs to be heated. Typically, cool cooling medium is allowed to exit from the battery line 4a to the high temperature line 5a via the battery outlet valve 18, whereby the battery line 4a is filled with relatively warmer cooling medium via the heat return valve 16.

In summer conditions no heating of the battery 4 is needed and the valves are controlled to allow the cooling fluid of the high temperature line 5a to bypass the battery line 4a. In other words, the battery outlet valve 18 will be closed. Instead, a portion of the flow passing in the mixing line 9 (from right to left in fig. 1) will be redirected to the battery line 4a via the heat return valve 16 and the battery pump 4b. The main mixing valve 17 may hence be arranged to divide the flow between the battery line 4a and the mixing line 9. The more cooling the battery 4 needs, the greater portion of the flow will be directed to the mixing line 9. The high temperature line 5a is, in this mode, arranged to cool the heat source 5 and to cool a condenser 3.

The condenser 3 is arranged on a refrigeration circuit 3a, which also includes a compressor 6 and an expansion valve 7. The refrigeration circuit 3a comprises a working medium which is separate from the cooling fluid of the rest of the cooling system. The refrigeration circuit 3a is arranged via the chiller 2, which cools the cooling fluid of the cooling system and thereby, at the same time, the chiller 2 heats the working medium in the refrigeration circuit 3a. The working medium in the refrigeration circuit 3a is subsequently cooled and condensed in the condenser 3, wherein the heat emitted from the condenser 3 will heat the cooling fluid in the high temperature line 5a.

Further, the cooling system 1 includes a radiator 10 arranged to inter alia cool the cooling fluid passing through the high temperature line 5a. This is useful in summer conditions where excess heat is produced and needs to be relieved to the surroundings. This is hence done by opening the radiator bypass valve 12 and the radiator inlet valve 14 towards the radiator 10 to thereby let the radiator 10 emit heat from the cooling fluid to the ambient air.

An advantage of the inventive cooling system is that parts of the cooling system may be utilised in different manners and for different purposes under different conditions.

In typical winter conditions, the batteries of the battery 4 will need to be heated to be maintained in the desired temperature interval. In such conditions the radiator valve 12 will be controlled to allow the cooling fluid in the high temperature line 5a to bypass the radiator 10. The idea in this mode is that heat from the condenser 3 and from the heat source 5, e.g. power electronics of a vehicle, will be utilised to keep the batteries at a desired temperature. This is achieved in that a controlled manner in that a chiller valve 13 arranged at the outlet of the chiller 2 opens towards the inlet end of the radiator 10. A radiator inlet valve 14 is arranged to direct the flow from the chiller 2 to the radiator 10. The outlet from the radiator 10 is controlled by a radiator outlet valve 15, via the chiller pump 2b to the chiller 2. In this mode the radiator 10 will be utilised for heating purposes to heat the cooling fluid passing through the chiller line 2a. The chiller 2 will thereby heat the working medium of the refrigeration circuit 3a passing by the expansion pump 6 to the condenser 3 at which the working medium will be condensed whereby heat will be emitted from the working medium of the refrigeration circuit 3a to the cooling fluid of the high temperature line 5a.

The battery 4 is heated by the cooling fluid in the high temperature line 5a. This is achieved in that a heat return valve 16 allows a flow of cooling fluid from the high temperature line 5a into the battery line 4a to thereby increase the temperature of the cooling fluid in the battery line 4a. A battery outlet valve 18 is arranged to allow a heat exchange with the high temperature line 5a, e.g. a return flow back into the high temperature line 5a. As an alternative, a heat exchanger may be arranged to provide said heat exchange.

Thereby, a balancing of the temperatures in the battery line 4a and the high temperature line 5a is achieved. The temperature of the battery line 4a is increased such that the battery 4 may be kept at a desired temperature and the temperature of the high temperature line 5a is decreased such that a relevant cooling of the heat source 5 and condenser 3 may be achieved.

Sensors are preferably arranged to monitor the temperature in the different lines. The valves are controlled in response to the monitored temperatures so as to provide the desired temperatures in the different lines, typically the high temperature line 5a and the battery line 4a. If the temperature balancing is not satisfactory, other regulating means are available. If further cooling of the high temperature line 5a is needed, a balanced amount of the cooling fluid may be passed through the high temperature radiator 10' by proper regulation of the valves. Further, an auxiliary heater 5' may be provided to heat the cooling fluid in connection to the battery line 4a if further heating of the battery 4 is desired. In the shown embodiment an auxiliary heater 5' is provided on the battery line 4a.

An expansion tank 19 is arranged along the high temperature line 5a to compensate for temperature differences and related pressure differences in the cooling system 1. Deaeration lines (not shown) are used in all the shown embodiments for ensuring that the air within the system is directed to the expansion tank 19. Shut off valves on the deaeration lines may be used to prevent pumping losses, heat losses or mixing of cooling fluid of different temperatures.

In fig. 2 a second embodiment of the inventive cooling system is disclosed. In the shown second embodiment an AC circuit 3b is arranged to provide a comfortable temperature in a cab (not shown) of a vehicle in which the cooling system 1 is arranged. The AC circuit of the shown embodiment shares working medium with the refrigeration circuit 3a, which is cooled by the condenser 3. The AC circuit 3b includes an evaporator 8, an expansion valve 21 and a shut off valve 22. The evaporator 8 is arranged to evaporate the working medium in the AC circuit 3b and to provide cooling to the cab of the vehicle. A HVAC-fan 24 is arranged to provide a forced air flow past the evaporator 8, where HVAC stands for Heating Ventilation Air Condition. In a conventional manner the working medium is evaporated in the evaporator 8, whereby heat is taken from the passing air flow which is thereby cooled as it enters the cab.

In this second embodiment that includes an AC circuit 3b for climatization of the cab, the condenser 3 has a double function in that it condenses working medium both for the chiller 2 and the evaporator 8. Thereby, the condenser 3 may be in greater need of cooling, and the heat delivered to the high temperature line 5a will, in such a case, be more important.

In the figures, the complete flow in the high temperature line 5a is passed through the cab heater 26. In a not shown embodiment only a portion of the flow of the high temperature line 5a is passed through the cab heater 26, wherein the other portion is arranged to bypass said cab heater. This may be advantageous to avoid a fall of pressure in said high temperature line 5a.

In summer conditions, with a typical ambient temperature of about 25 °C or higher the battery 4 needs to be cooled to be maintained in the typical desired temperature interval of 15-30 °C. In such conditions the cooling fluid passes from the chiller valve 13 towards the mixing line 9 via the chiller line 2a, and from the battery line 4a to the mixing line 9 via the main mixing valve 17. The cooling fluid re-enters the battery line 4a from the mixing line 9, via the heat return valve 16, and flows via the battery pump 4b into the separate battery lines 4a', 4a", 4a"'.

The cooling fluid on the chiller line 2a passing the chiller 2 is cooled by the evaporated working medium arriving in the refrigeration circuit 3a from the condenser 3. The condenser 3 is in turn cooled by the cooling fluid passing through the high temperature line 5a, which may be cooled by the ambient air in the radiator 10. A cab heater 26 is arranged in connection the evaporator 8, and a blend air flap 25 is arranged to control the air flow for heat exchange with either the evaporator 8 or the cab heater 26, or past both of them without interaction. In summer conditions the air flow will be controlled into heat exchange with the evaporator 8 and will thereby be cooled.

In winter conditions, with a typical ambient temperature of about 5 °C or lower, heating of both the cab and the batteries may be needed, preferably at different temperatures. Hence, in such conditions the relatively warm cooling fluid passing through the high temperature line 5a will heat the air provided into the cab via heat exchange with the cab heater 26. The AC-valve 22 is closed in this mode and no evaporation will occur in the evaporator 8. Possibly, no further cooling of the cooling fluid in the high temperature line 5a is needed in winter conditions. Hence, the radiator bypass valve 12 may be controlled to bypass the radiator 10 with the full flow of cooling fluid in the high temperature line 5a.

Instead, in this mode the radiator 10 is arranged to take up heat from the surroundings that is utilized in the chiller to heat the condenser, which in turn heats the high temperature line 5a, such that the cab may be heated via the cab heater 26. Hence, in this mode the chiller valve 13 opens towards the radiator 10 via the radiator inlet valve 14. The radiator outlet valve 15 is thus arranged to direct the cooling fluid that has been heated inside the radiator 10 to the chiller line 2a, via the chiller pump 2b, and through the chiller 2.

In typical spring or autumn conditions with an ambient temperature of about 10-15 °C the radiator 10 is cooled by the ambient air. The AC circuit 3b is inactive and no working medium runs through the refrigeration circuit 3a or the AC circuit 3b. The cooling fluid that passes through the chiller 2 is hence unaffected in temperature. The cooled cooling fluid arriving from the radiator 10 via the radiator outlet valve 15 enters the chiller line 2a. The heat return valve 16 is open to a desired degree to achieve a desired temperature in the battery line 4a. Typically, the cooling fluid arriving from the radiator 10 has a temperature of about 10-15 °C and an appropriate temperature of the cooling fluid for cooling is about 20 °C. Sensors are arranged to monitor the temperatures and a control unit may be arranged to control the valves and pumps so as to achieve an appropriate temperature.

A problem in the typical spring conditions is that cooling may be needed for not only the battery 4, but also for the high temperature line 5a. This may be achieved in that a portion of the flow in the high temperature line 5a is allowed to enter the mixing line via the heat return valve 16, and that a relatively cooler cooling fluid is returned to the high temperature line 5a via the battery outlet valve 18. As an alternative, the radiator 10 may be utilized part of the time to cool the high temperature line 5a and part of the time to cool the chiller line 2. In certain conditions the cooling capacity is however not enough. Therefore, more cooling capacity may be provided.

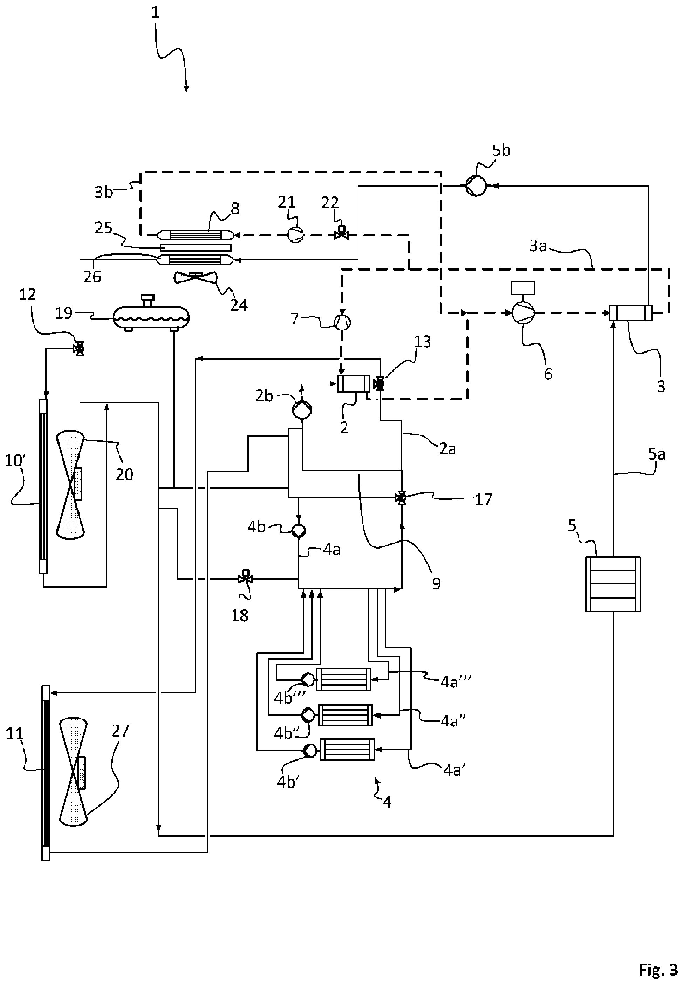

In fig. 3 a cooling system 1 according to a third embodiment is shown. In this embodiment a second radiator is arranged to provide more cooling capacity. The two radiators may be denoted a high temperature radiator 10' and a low temperature radiator 11, although their function may be similar. A low temperature radiator fan 27 may be arranged to provide a forced flow past the low temperature radiator 11 and increase its heat exchange efficiency, and a high temperature radiator fan 20 may be arranged to provide a forced flow past the high temperature radiator 10'. The high temperature radiator 10' is dedicated to cool the high temperature line 5a. A radiator bypass valve 12 is arranged to connect a selectable portion of the flow in the high temperature line 5a past the high temperature radiator 10'. Hence, the radiator bypass valve 12 may be controlled to circulate the high temperature line 5e and bypass the high temperature radiator 10', to allow the flow pass through the high temperature radiator 10', or to divide the flow there between to any desired degree.

The low temperature radiator 11 is arranged to heat the chiller line 2a in a heat pump mode during winter conditions and to cool the battery 4 via the mixing line 9 in summer and spring conditions, unless the battery line 4a needs a temperature that is lower than the ambient temperature.

A main advantage of the cooling system shown in fig. 3 is that no limitations exists with regard to the cooling. In summer conditions both the high temperature radiator 10' and the low temperature radiator 11 may be utilized to cool cooling fluid. An expansion tank 19 is arranged and connected to a line connecting the high temperature line 5a to the battery line 4a. In contrast to the first and second embodiments, the cooling system 1 according to the third embodiment does not involve a heat return valve 16. Heating and cooling of the battery line 4a may nonetheless be achieved by regulation of the main control valve 17, the battery outlet valve 18 and the battery pump 4b, which governs the overall flow in the battery line 4a.

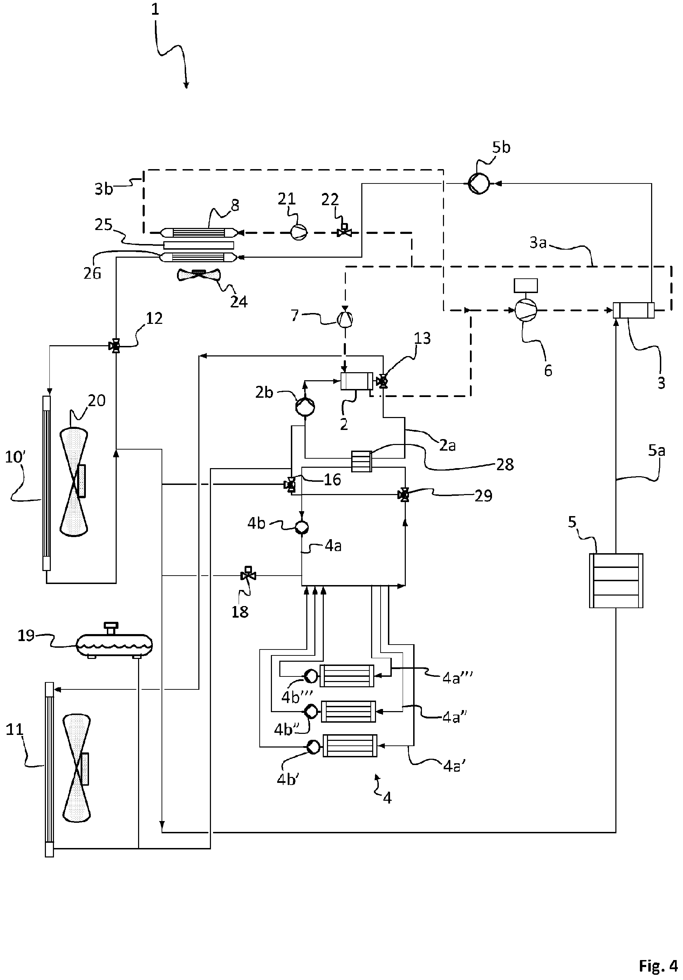

In fig. 4 a cooling system according to a fourth embodiment is shown. In this embodiment a heat exchanger 28 is arranged to replace the mixing line of the embodiments described above and to provide the heat exchange between the chiller line 2a and the battery line 4a without mixing the different fluids. A heat exchanger bypass valve 29 is arranged in the battery line 4a to direct a desired portion of the cooling fluid circulated in the battery line to the heat exchanger 28. Other than that, the cooling system is almost identical to the cooling system according to the third embodiment shown in fig. 3. A heat return valve 16 is arranged with a slightly different function than in the embodiments above in that it may control a flow from either the high temperature line 5a or the chiller line 2a to the battery line 4a.

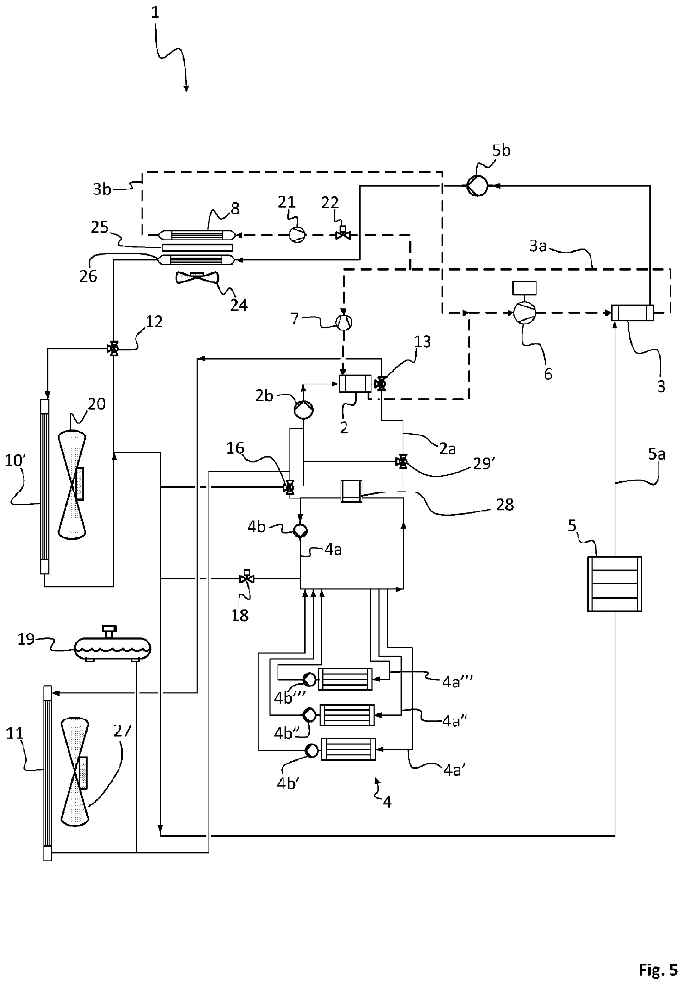

In fig. 5 a cooling system according to a fifth embodiment is shown. The cooling system according to this embodiment is for most details identical to the fourth embodiment shown in fig. 4. A first difference is that the heat exchanger valve 29' is arranged in the chiller line 2a instead of the battery line 4a. The result is however similar in that heat exchange is achieved by opening the heat exchanger valve 29' to the heat exchanger 28 and that heat exchange may be avoided, to a desired degree, by opening the heat exchanger valve 29' to the line bypassing the heat exchanger 28. The heat return valve 16 is arranged to connect an inlet from the high temperature line 5a to the battery line 4a, whereby a corresponding flow is allowed to exit the battery line 4a for the high temperature line 5a via the battery outlet valve 18. The heat return valve 16 may also be arranged to connect an inlet from the chiller line 2a to the battery line 4a, to cool the battery line 4a, but in this embodiment such heat exchange is typically achieved via the heat exchanger 28 and controlled by the heat exchanger valve 29'.

A main difference of the fourth and fifth embodiments with respect to the other embodiments is that the cooling fluid is at least partly kept separated in the fourth and fifth embodiments. Hence, heat exchange between the chiller line 2a and the battery line 4a is performed via a heat exchanger 28, whereas in the other embodiments the heat exchange is achieved by mixing of the cooling fluids of the separate lines. As indicated above, the term "into heat exchange" is used to cover both the heat exchange by mixing of cooling fluid and the heat exchange of cooling fluid achieved over a heat exchanger, without mixing of the cooling fluids.

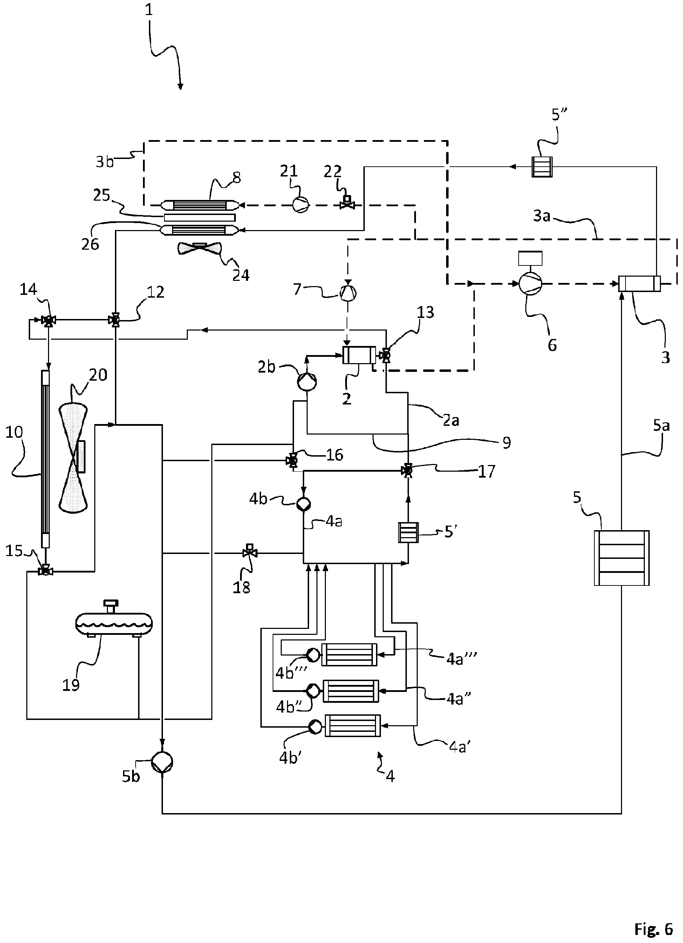

In fig. 6 a cooling system according to a sixth embodiment is shown, which is identical to the cooling system according to the second embodiment shown in fig. 2, except for three details. Firstly, the high temperature pump 5b is located downstream of the outlet from the radiator 10. Further, first and a second auxiliary heat sources, typically in the form of electrical heaters, are arranged in the system. The first auxiliary heat source 5' is arranged in the battery line to provide dedicated heat to the battery 4, whenever such heating is desired. The second auxiliary heat source 5" is arranged along the high temperature line 5a between the condenser 3 and cab heater 26 so as to make sure that there will always be sufficient heat to heat the cab.

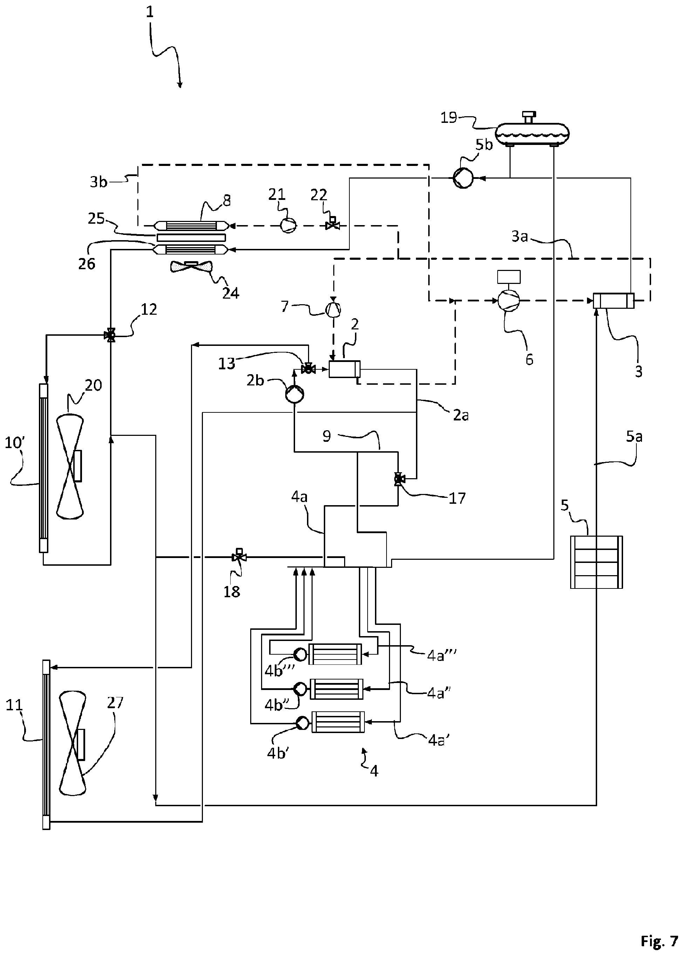

In fig. 7 a cooling system according to a seventh embodiment is shown. This seventh embodiment illustrates that the battery pump 4b of all other embodiments may be omitted in view of that circulation of the cooling fluid will be provided by the individual pumps 4b', 4b" and 4b‴ of the sub-lines 4a', 4a" and 4a‴ of the battery line 4a.

As for the other embodiments, the main mixing valve 17 governs how much of the cooling fluid from the chiller line 2a that is circulated into the battery line 4a. Further, in a case when heating of the batteries 4 is desired, cooled cooling fluid will be allowed to exit from the battery line 4a into the high temperature line 5a via the battery outlet valve 18.

The individual pumps 4b', 4b" and 4b‴ of the sub-lines 4a', 4a" and 4a‴ may be individually governed so as to provide individual cooling (or heating) of each of the battery packs. The temperature of the cooling fluid will be the same entering the different sub-lines 4a', 4a" and 4a"', but the cooling of the individual battery packs may be governed by applying different fluid flows by the individual pumps 4b', 4b" and 4b"', such that each battery pack will obtain the optimal cooling (or heating) needed for said battery pack.

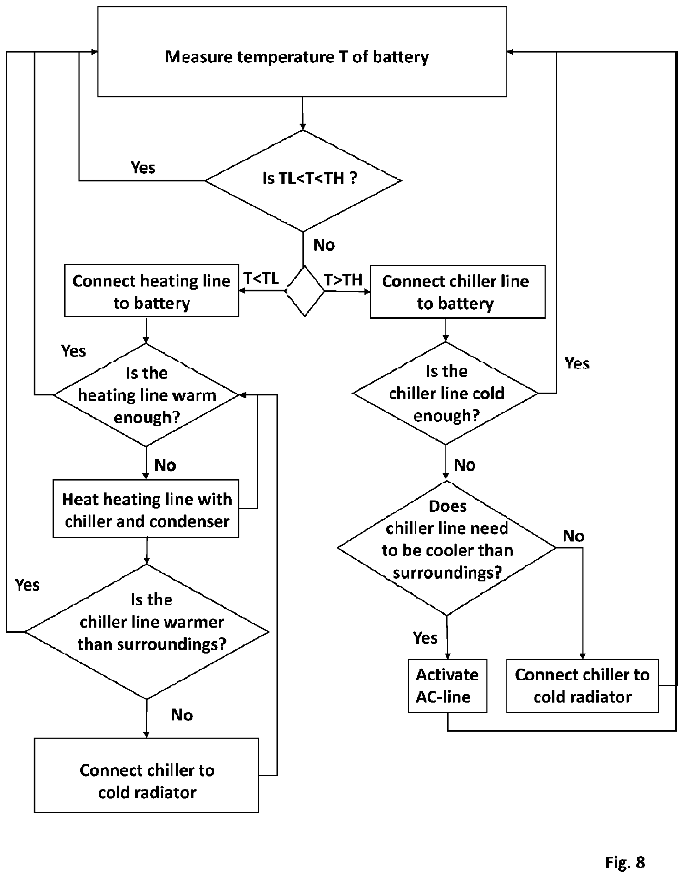

In fig. 8 a method of tempering a battery is shown in the form of a schematic block diagram.

The method is adapted to be performed with the cooling system described above according to whichever one of the embodiments. The method comprises inter alia the following steps.

Firstly, the temperature T of the battery 4 is monitored, either continuously or at predetermined occasions, such as once every specific interval or at specific occasions. In order to function at its best, the battery should be kept in a specific temperature range, i.e. the temperature of the battery should be higher than a low threshold temperature TL and lower than a high threshold temperature TH; TL<T<TH. In a typical embodiment the low threshold temperature TL is about 15 °C and the high threshold temperature TH is about 30 °C. These are however only example temperatures and the thresholds depend on the specific type of battery used. The interval between the thresholds may also be broader or narrower, and/or it may be dependent on other parameters, such as the outside temperature, motor capacity used and the like.

If the temperature T of the battery 4 is lower than the low threshold temperature TL, heating is considered needed and a control unit will control relevant valves and pumps of the cooling system to provide cooling fluid from a heating line, i.e. the high temperature line 5a, to the battery 4. The high temperature line 5a is normally heated be a heat source 5, typically in the form of an engine and/or power electronics of a vehicle, said engine and/or power electronics thereby being cooled to a appropriate working temperature.

In connection to this step of providing cooling fluid from a high temperature line to the battery, the temperature of the cooling fluid in said high temperature line is monitored. If the temperature in said high temperature line is sufficient to heat the battery heating will proceed by regulating the relevant valves of the cooling system so as to provide appropriate amount of cooling fluid from the high temperature line to the battery 4.

If, on the other hand, the temperature of the cooling fluid in said high temperature line 5a is not sufficiently high to heat the battery, then said cooling fluid will be heated. In a first step, if the low temperature radiator 11 is in use, it will be bypassed so that cooling of the cooling fluid is avoided. Secondly, heating may be accomplished by a heat exchange with the condenser 3. The chiller 2 provides heat to the condenser via the chiller line 2a. If the cooling fluid in the chiller line 2a is cooler than the ambient air temperature, heat may be taken from the high temperature radiator 10,10' and circulated in the chiller line 2a to the chiller 2. Heating of the battery may then be continuously upheld so as to keep the temperature T of the battery 4 within the desired temperature range. If heating becomes too effective such that the temperature T of the battery exceeds an upper threshold, which may be the same or may be lower than the high threshold temperature TH, the valves will be regulated to decrease the heating efficiency, or the chiller output may be decreased. In a specific embodiment no cooling by means of the AC circuit 3b will be started when heating is under way.

If, on the contrary, the temperature T of the battery 4 is higher than the high threshold temperature TH; T>TH, cooling is considered needed and the control unit will control relevant valves and pumps of the cooling system to provide cooling fluid to cool the battery 4. This is achieved by connecting the chiller line 2a to heat exchange with the battery line 4a, either directly or via a heat exchanger 28.

At this point the temperature of the cooling fluid in the chiller line 2a will be measured. If the temperature of said cooling fluid is cold enough the cooling of the battery 4 may be accomplished by regulation of the concerned valves and pumps. If the chiller line 2a is not cold enough it will need to be cooled. The temperature of the chiller line 2a is then compared with the ambient temperature. If the ambient temperature is colder than the chiller line, the chiller valve 13, will be controlled to open to a radiator 10, 11 so as to cool the chiller line 2a by means of the ambient air. If this is not enough, refrigeration circuit 3a will be activated. The chiller 2 will thus emit heat to the high temperature line 5a via the condenser 3. The high temperature line 5a may, if necessary, be cooled by heat exchange with ambient air in a radiator, e.g. the high temperature radiator 10, 10'.

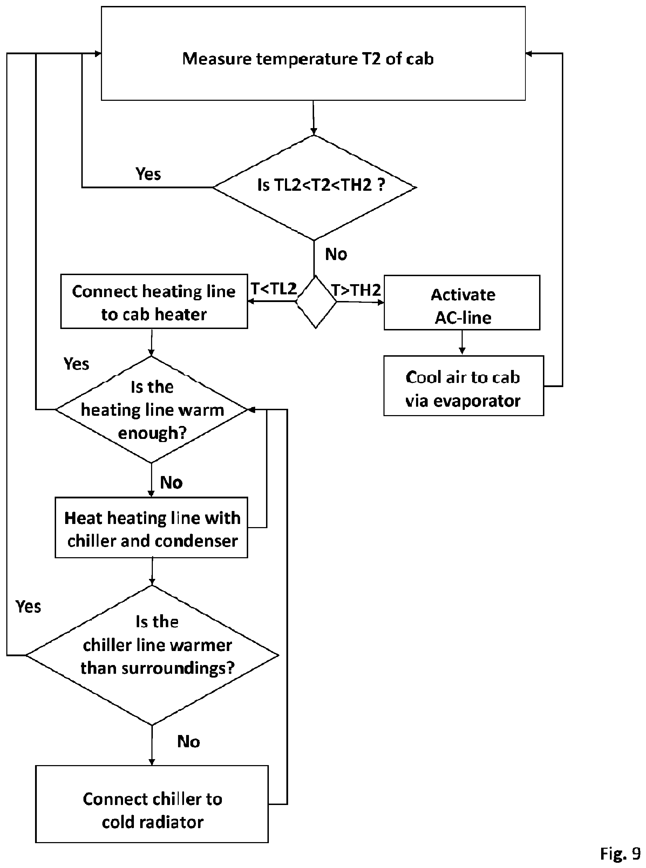

In fig. 9 a method of climatizing a cab of a vehicle is shown in the form of a schematic block diagram. This method may be performed in parallel with the method of tempering a battery as described above, using the same features, or it may be a separate method.

Firstly, the temperature T2 of the cab is monitored, either continuously or at predetermined occasions, such as once every specific interval or at specific occasions. For the convenience of the driver and passengers in the cab the temperature inside the cab should be kept within a very narrow temperature range typically set from within the cab. The temperature of the battery should be higher than a low threshold temperature TL2 and lower than a high threshold temperature TH2; TL2<T2<TH2. In a typical embodiment the temperature range of the set temperature is very narrow such that no bigger deviation than half a degree Centigrade is allowed.

If the temperature T2 of the cab is lower than the low threshold temperature TL2, heating is considered needed and a control unit will control relevant valves and pumps of the cooling system to provide heat exchange in the cab heater with cooling fluid from a heating line, i.e. the high temperature line 5a, to the cab.

If, on the other hand, the temperature of the cooling fluid in said heating line is not sufficient to heat the cab, then said cooling fluid will be heated. In a first step, if the low temperature radiator 11 is in use, it will be bypassed so that cooling of the cooling fluid is avoided. Secondly, heating may be accomplished by a heat exchange with the condenser 3. The chiller 2 provides heat to the condenser via the chiller line 2a. If the cooling fluid in the chiller line 2a is cooler than the ambient air temperature, heat may be taken from the low temperature radiator 10,11 and circulated in the chiller line 2a to the chiller 2. Heating of the battery may then be continuously upheld so as to keep the temperature T2 of the cab within the desired temperature range. If heating becomes too effective such that the temperature T2 of the battery exceeds an upper threshold, which may be the same or may be lower than the high threshold temperature TH2, the inlet temperature may easily be regulated by the blend air flap 25. Also, the valves may be regulated to decrease the heating efficiency, or the chiller output may be decreased. Normally, no cooling by means of the AC circuit 3b will be started when heating is under way. The cooling fluid of the high temperature line 5a, may never be heated to a higher than at which the power electrics may operate. Specifically, said cooling fluid is arranged to cool the power electrics of the vehicle.

If, on the contrary, the temperature T2 in the cab is higher than the high threshold temperature TH2; T2>TH2, cooling is considered needed and the control unit will command the AC-system to start working.

With the AC-system in operation cooling of the cab is performed in a conventional manner.

Above, the invention has been described with reference to specific embodiments. The invention is however not limited to these embodiments. It is obvious to a person skilled in the art that other embodiments are possible within the scope of the following claims.

## Claims

1. A cooling system (1) for tempering a battery (4) inside a specific temperature interval, the cooling system comprising:
- a chiller (2) and a chiller line (2a) arranged in heat exchange with said chiller (2),
- a heat source (5,5") and a high temperature line (5a) arranged in heat exchange with said heat source (5,5"),
- a battery line (4a) arranged in heat exchange with the battery (4),
- at least one pump (2b,4b,5b), arranged to in operation convey a cooling fluid in at least one of said lines, and
- a condenser (3) and a refrigeration circuit (3a) arranged in heat exchange with said condenser (3), wherein a working medium is arranged to in operation be circulated in said refrigeration circuit (3a),
wherein the chiller line (2a) is selectively connectable into heat exchange with the battery line (4a) so as to provide cooling of the battery (4), and wherein the high temperature line (5a) is selectively connectable into heat exchange with the battery line (4a) to heat the battery (4), wherein the working medium of the refrigeration circuit (3a) is arranged to be cooled by heat exchange with the cooling fluid in the high temperature line (5a) in said condenser (3), and wherein the refrigeration circuit (3a) is arranged by the chiller (2), said chiller being arranged to heat the working medium of the refrigeration circuit (3a) by heat exchange with the cooling fluid in the chiller line (2a), which cooling fluid is thereby cooled, **characterized in that** the cooling system comprises a mixing line (9), and wherein the chiller line (4a) and the high temperature line are connectable for at least partial heat exchange with the battery line (4a) via said mixing line (9), wherein the chiller line (2a), the battery line (4a), and the high temperature line (5a) are interconnectable such that the same cooling fluid may be circulated in all of said lines.

2. The cooling system (1) according to claim 1, **characterized in that** the cooling system comprises at least one radiator (10,11), which is connectable to the chiller (2), to selectively heat said chiller (2).

3. The cooling system (1) according to claim 1, wherein the cooling system comprises a radiator (10,10'), which is connectable to the high temperature line (5a), so as to selectively cool the cooling fluid in said high temperature line (5a), said radiator being either the same radiator as the at least one radiator (10) that is connectable to the chiller (2), or a separate radiator (10').

4. The cooling system (1) according to anyone of the preceding claims, wherein at least one valve (17, 29, 29') is arranged to selectively connect the chiller line (2a) into heat exchange with the battery line (4a) so as to provide cooling of the battery (4), and wherein at least one valve (18) is arranged to selectively connect the high temperature line (5a) for heat exchange with the battery line (4a) to heat the battery (4).

5. The cooling system (1) according to anyone of the preceding claims, wherein the heat source (5,5') is an electric engine, a combustion engine and/or an electric heater.

6. The cooling system (1) according to anyone of the preceding claims, wherein the cooling system further comprises an AC circuit (3b) for providing an air flow of a desired temperature to a cab, the condenser (3) being arranged to cool a working medium that is circulated in said AC circuit (3b) and wherein said AC circuit comprises an evaporator (8) for absorbing heat to said working medium from the air flow to be provided to the cab as said working medium is evaporated in said evaporator (8)..

7. The cooling system (1) according to anyone of the preceding claims, wherein a main mixing valve (17) is arranged to selectively connect the chiller line (2a) to the battery line (4a), and wherein a battery outlet valve (18) is arranged to selectively connect the battery line (4a) to the high temperature line (5a).

8. The cooling system (1) according to anyone of the preceding claims, wherein the battery line (4a) comprises a plurality of sublines (4a',4a",4a‴), for cooling separate battery packs or separate portions of the battery (4), each subline being provided with a separate pump (4b',4b",4b‴).

9. The cooling system (1) according to anyone of the preceding claims, wherein sensors are arranged to monitor the temperature in the different lines, and wherein a control unit is arranged to control the heat exchange between the chiller line (2a) and the battery line (4a) and/or between the high temperature line (5a) and the battery line (4a) based on said monitored temperatures.

10. A vehicle (23) **characterised in that** it comprises a cooling system (1) according to anyone of the preceding claims.

## Patentansprüche

1. Kühlsystem (1) zum Temperieren einer Batterie (4) in einem bestimmten Temperaturbereich, wobei das Kühlsystem umfasst:
- einen Kühler (2) und eine in Wärmeaustausch mit dem Kühler (2) angeordnete Kühlerleitung (2a),
- eine Wärmequelle (5,5") und eine in Wärmeaustausch mit der Wärmequelle (5,5") angeordnete Hochtemperaturleitung (5a),
- eine in Wärmeaustausch mit der Batterie (4) angeordnete Batterieleitung (4a),
- wenigstens eine Pumpe (2b,4b,5b), die dazu eingerichtet ist, im Betrieb ein Kühlfluid in wenigstens eine der genannten Leitungen zu fördern, und
- einen Kondensator (3) und einen in Wärmeaustausch mit dem Kondensator (3) angeordneten Kältekreislauf (3a), wobei ein Arbeitsmedium dazu eingerichtet ist, im Betrieb in dem Kältekreislauf (3a) zu zirkulieren,
wobei die Kühlerleitung (2a) selektiv in Wärmeaustausch mit der Batterieleitung (4a) verbindbar ist, um eine Kühlung der Batterie (4) bereitzustellen, und wobei die Hochtemperaturleitung (5a) selektiv in Wärmeaustausch mit der Batterieleitung (4a) verbindbar ist, um die Batterie (4) zu erwärmen, wobei das Arbeitsmedium des Kältekreislaufs (3a) dazu eingerichtet ist, durch Wärmeaustausch mit dem Kühlfluid in der Hochtemperaturleitung (5a) im Kondensator (3) gekühlt zu werden, und wobei der Kältekreislauf (3a) durch den Kühler (2) gebildet wird, wobei der Kühler dazu eingerichtet ist, das Arbeitsmedium des Kältekreislaufs (3a) durch Wärmeaustausch mit dem Kühlfluid in der Kühlerleitung (2a) zu erwärmen, wobei das Kühlfluid dadurch gekühlt wird, **dadurch gekennzeichnet, dass** das Kühlsystem eine Mischleitung (9) umfasst, und wobei die Kühlerleitung (4a) und die Hochtemperaturleitung über die Mischleitung (9) für einen wenigstens teilweisen Wärmeaustausch mit der Batterieleitung (4a) verbindbar sind, wobei die Kühlerleitung (2a), die Batterieleitung (4a) und die Hochtemperaturleitung (5a) derart miteinander verbindbar sind, dass in all diesen Leitungen dasselbe Kühlfluid zirkulieren kann.

2. Kühlsystem (1) nach Anspruch 1, **dadurch gekennzeichnet, dass** das Kühlsystem wenigstens einen Radiator (10,11) umfasst, der mit dem Kühler (2) verbindbar ist, um den Kühler (2) selektiv zu erwärmen.

3. Kühlsystem (1) nach Anspruch 1, wobei das Kühlsystem einen Radiator (10,10') umfasst, der mit der Hochtemperaturleitung (5a) verbindbar ist, um das Kühlfluid in der Hochtemperaturleitung (5a) selektiv zu kühlen, wobei der Radiator entweder derselbe Radiator wie der wenigstens eine Radiator (10), der mit dem Kühler (2) verbindbar ist, oder ein separater Radiator (10') ist.

4. Kühlsystem (1) nach einem der vorangehenden Ansprüche, wobei wenigstens ein Ventil (17, 29, 29') dazu eingerichtet ist, die Kühlerleitung (2a) in Wärmeaustausch mit der Batterieleitung (4a) selektiv zu verbinden, um eine Kühlung der Batterie (4) bereitzustellen, und wobei wenigstens ein Ventil (18) dazu eingerichtet ist, die Hochtemperaturleitung (5a) selektiv mit der Batterieleitung (4a) zu verbinden, um die Batterie (4) zu erwärmen.

5. Kühlsystem (1) nach einem der vorangehenden Ansprüche, wobei die Wärmequelle (5,5') ein Elektromotor, ein Verbrennungsmotor und/oder eine elektrische Heizvorrichtung ist.

6. Kühlsystem (1) nach einem der vorangehenden Ansprüche, wobei das Kühlsystem ferner einen Klimakreislauf (3b) umfasst, um einer Fahrerkabine einen Luftstrom mit einer gewünschten Temperatur zuzuführen, wobei der Kondensator (3) dazu eingerichtet ist, ein Arbeitsmedium zu kühlen, das in dem Klimakreislauf (3b) zirkuliert, und wobei der Klimakreislauf einen Verdampfer (8) umfasst, um an das Arbeitsmedium Wärme aus dem der Fahrerkabine zuzuführenden Luftstrom abzugeben, während das Arbeitsmedium in dem Verdampfer (8) verdampft wird.

7. Kühlsystem (1) nach einem der vorangehenden Ansprüche, wobei ein Hauptmischventil (17) dazu eingerichtet ist, die Kühlerleitung (2a) selektiv mit der Batterieleitung (4a) zu verbinden, und wobei ein Batterieauslassventil (18) dazu eingerichtet ist, die Batterieleitung (4a) selektiv mit der Hochtemperaturleitung (5a) zu verbinden.

8. Kühlsystem (1) nach einem der vorangehenden Ansprüche, wobei die Batterieleitung (4a) eine Mehrzahl von Teilleitungen (4a',4a",4a‴) zum Kühlen separater Batteriepacks oder separater Abschnitte der Batterie (4) umfasst, wobei jede Teilleitung über eine separate Pumpe (4b',4b",4b"') verfügt.

9. Kühlsystem (1) nach einem der vorangehenden Ansprüche, wobei Sensoren zur Überwachung der Temperatur in den verschiedenen Leitungen angeordnet sind und wobei eine Steuereinheit zum Steuern des Wärmeaustauschs zwischen der Kühlerleitung (2a) und der Batterieleitung (4a) und/oder zwischen der Hochtemperaturleitung (5a) und der Batterieleitung (4a) basierend auf den überwachten Temperaturen angeordnet ist.

10. Fahrzeug (23), **dadurch gekennzeichnet, dass** es ein Kühlsystem (1) nach einem der vorangehenden Ansprüche umfasst.

## Revendications

1. Système de refroidissement (1) destiné à tempérer une batterie (4) dans un intervalle de températures spécifique, le système de refroidissement comprenant :
- un refroidisseur (2) et une conduite de refroidisseur (2a) agencée en échange de chaleur avec ledit refroidisseur (2), - une source de chaleur (5, 5") et une conduite à haute température (5a) agencée en échange de chaleur avec ladite source de chaleur (5, 5"),
- une conduite de batterie (4a) agencée en échange de chaleur avec la batterie (4),
- au moins une pompe (2b, 4b, 5b), agencée pour, en fonctionnement, transporter un fluide de refroidissement dans au moins une desdites conduites, et
- un condenseur (3) et un circuit de réfrigération (3a) agencé en échange de chaleur avec ledit condenseur (3), dans lequel un milieu de travail est agencé pour, en fonctionnement, circuler dans ledit circuit de réfrigération (3a), dans lequel la conduite de refroidisseur (2a) peut être connectée sélectivement en échange de chaleur avec la conduite de batterie (4a) de manière à assurer le refroidissement de la batterie (4), et dans lequel la conduite à haute température (5a) peut être connectée sélectivement en échange de chaleur avec la conduite de batterie (4a) afin de chauffer la batterie (4), dans lequel le milieu de travail du circuit de réfrigération (3a) est agencé pour être refroidi par échange de chaleur avec le fluide de refroidissement dans la conduite à haute température (5a) dans ledit condenseur (3), et dans lequel le circuit de réfrigération (3a) est agencé par le refroidisseur (2), ledit refroidisseur étant agencé pour chauffer le milieu de travail du circuit de réfrigération (3a) par échange de chaleur avec le fluide de refroidissement dans la conduite de refroidisseur (2a), lequel fluide de refroidissement est ainsi refroidi, **caractérisé en ce que** le système de refroidissement comprend une conduite de mélange (9), et dans lequel la conduite de refroidisseur (4a) et la conduite à haute température peuvent être connectées pour un échange de chaleur au moins partiel avec la conduite de batterie (4a) via ladite conduite de mélange (9), dans lequel la conduite de refroidisseur (2a), la conduite de batterie (4a) et la conduite à haute température (5a) peuvent être reliées entre elles de telle sorte que le même fluide de refroidissement puisse circuler dans l'ensemble desdites conduites.

2. Système de refroidissement (1) selon la revendication 1, **caractérisé en ce que** le système de refroidissement comprend au moins un radiateur (10, 11), qui peut être connecté au refroidisseur (2), pour chauffer sélectivement ledit refroidisseur (2).

3. Système de refroidissement (1) selon la revendication 1, dans lequel le système de refroidissement comprend un radiateur (10, 10'), qui peut être connecté à la conduite à haute température (5a), de manière à refroidir sélectivement le fluide de refroidissement dans ladite conduite à haute température (5a), ledit radiateur étant soit le même radiateur que l'au moins un radiateur (10) qui peut être connecté au refroidisseur (2), soit un radiateur séparé (10').

4. Système de refroidissement (1) selon l'une quelconque des revendications précédentes, dans lequel au moins une vanne (17, 29, 29') est agencée pour connecter sélectivement la conduite de refroidisseur (2a) en échange de chaleur avec la conduite de batterie (4a) de manière à assurer le refroidissement de la batterie (4), et dans lequel au moins une vanne (18) est agencée pour connecter sélectivement la conduite à haute température (5a) en échange de chaleur avec la conduite de batterie (4a) afin de chauffer la batterie (4).

5. Système de refroidissement (1) selon l'une quelconque des revendications précédentes, dans lequel la source de chaleur (5, 5') est un moteur électrique, un moteur à combustion et/ou un dispositif de chauffage électrique.

6. Système de refroidissement (1) selon l'une quelconque des revendications précédentes, dans lequel le système de refroidissement comprend en outre un circuit CA (3b) destiné à fournir un écoulement d'air d'une température souhaitée vers une cabine, le condenseur (3) étant agencé pour refroidir un milieu de travail qui est mis en circulation dans ledit circuit CA (3b) et dans lequel ledit circuit CA comprend un évaporateur (8) destiné à absorber la chaleur vers ledit milieu de travail à partir de l'écoulement d'air à fournir à la cabine lorsque ledit milieu de travail est évaporé dans ledit évaporateur (8).

7. Système de refroidissement (1) selon l'une quelconque des revendications précédentes, dans lequel une vanne de mélange principale (17) est agencée pour connecter sélectivement la conduite de refroidisseur (2a) à la conduite de batterie (4a), et dans lequel une vanne de sortie de batterie (18) est agencée pour connecter sélectivement la conduite de batterie (4a) à la conduite à haute température (5a).

8. Système de refroidissement (1) selon l'une quelconque des revendications précédentes, dans lequel la conduite de batterie (4a) comprend une pluralité de sous-conduites (4a', 4a", 4a‴), destinées à refroidir des blocs de batterie séparés ou des portions séparées de la batterie (4), chaque sous-conduite étant munie d'une pompe séparée (4b', 4b", 4b‴).

9. Système de refroidissement (1) selon l'une quelconque des revendications précédentes, dans lequel des capteurs sont agencés pour surveiller la température dans les différentes conduites, et dans lequel une unité de commande est agencée pour commander l'échange de chaleur entre la conduite de refroidisseur (2a) et la conduite de batterie (4a) et/ou entre la conduite à haute température (5a) et la conduite de batterie (4a) sur la base desdites températures surveillées.

10. Véhicule (23), **caractérisé en ce qu'**il comprend un système de refroidissement (1) selon l'une quelconque des revendications précédentes.
